# EUROPÄISCHE PATENTANMELDUNG

(11) **EP 4 847 305 A1**
(43) Veröffentlichungstag der Anmeldung: **02.12.2026**
(21) Anmeldenummer: 26177761.9
(22) Anmeldetag: 11.05.2026
(51) Int. Cl.: B60L 58/22, B60L 58/12, B60L 58/16, B60L 58/18, H02J 7/52

(54) **VERFAHREN UND EINE VORRICHTUNG ZUM BETREIBEN EINES BATTERIESYSTEMS**

(30) Priorität: 26.05.2025 DE 102025120525
(71) Anmelder: MAN Truck & Bus SE, 80995 München (DE)
(72) Erfinder: Erhard, Jonathan, 80995 München (DE); Pravin, Rohit, 80995 München (DE)

(57) **Zusammenfassung**

Die Erfindung betrifft u.a. ein Verfahren zum Betreiben eines Batteriesystems (30) für ein Kraftfahrzeug (20), wobei das Batteriesystem (30) mehrere elektrisch miteinander verbundene, vorzugsweise elektrisch parallel geschaltete, Batteriepacks (30A-30F) aufweist. Das Verfahren weist ein Ermitteln von aktuellen Ausgleichsströmen (I_{A}) zwischen den mehreren Batteriepacks (30A-30F) auf. Das Verfahren weist ferner ein Festlegen einer aktuellen Entladestromgrenze (I^{E}_{Lim}), die einen von dem Batteriesystem (30) aktuell maximal abführbaren Entladestrom (I_{E}) begrenzt, und/oder einer aktuellen Ladestromgrenze (I^{L}_{Lim}), die einen dem Batteriesystem (30) aktuell maximal zuführbaren Ladestrom (I_{L}) begrenzt, unter Berücksichtigung der ermittelten aktuellen Ausgleichsströme (I_{A}) auf. Das Verfahren weist weiterhin ein Betreiben des Batteriesystems (30) unter Berücksichtigung der festgelegten aktuellen Entladestromgrenze (I^{E}_{Lim}) und/oder aktuellen Ladestromgrenze (I^{L}_{Lim}) auf.

## Beschreibung

Die Erfindung betrifft ein Verfahren und eine Vorrichtung zum Betreiben eines Batteriesystems für ein Kraftfahrzeug. Ferner betrifft die Erfindung ein System und ein Kraftfahrzeug.

Im Stand der Technik sind Fahrzeuge, die mittels eines Elektromotors zumindest teilweise elektrisch angetrieben werden, grundsätzlich bekannt. Die hierfür notwendige elektrische Energie wird in der Regel von einer Traktionsbatterie des Fahrzeugs bereitgestellt, die eine Vielzahl elektrisch miteinander verschalteter Batteriezellen umfasst.

Während elektrisch angetriebene Personenkraftfahrzeuge in der Regel über eine (einzige) Traktionsbatterie bzw. ein Batteriepack verfügen, weisen Elektronutzfahrzeuge, wie z. B. Elektrolastkraftwagen oder Elektrobusse, aufgrund ihres größeren Gewichts üblicherweise einen Verbund aus mehreren, meist unabhängig voneinander austauschbaren Batteriepacks auf.

Aufgrund fertigungs- und/oder betriebsbedingter Unterschiede - etwa infolge variierender Alterung, unterschiedlicher Positionen im Verbund oder unterschiedlicher Formfaktoren der Batteriepacks - weisen die einzelnen Batteriepacks in der Regel unterschiedliche Alterungszustände und Leistungsniveaus bzw. Ladungszustände auf. Dies führt, wie die nachfolgende Betrachtung verdeutlicht, zu Problemen hinsichtlich der Einhaltung von Stromgrenzen in dem Verbund.

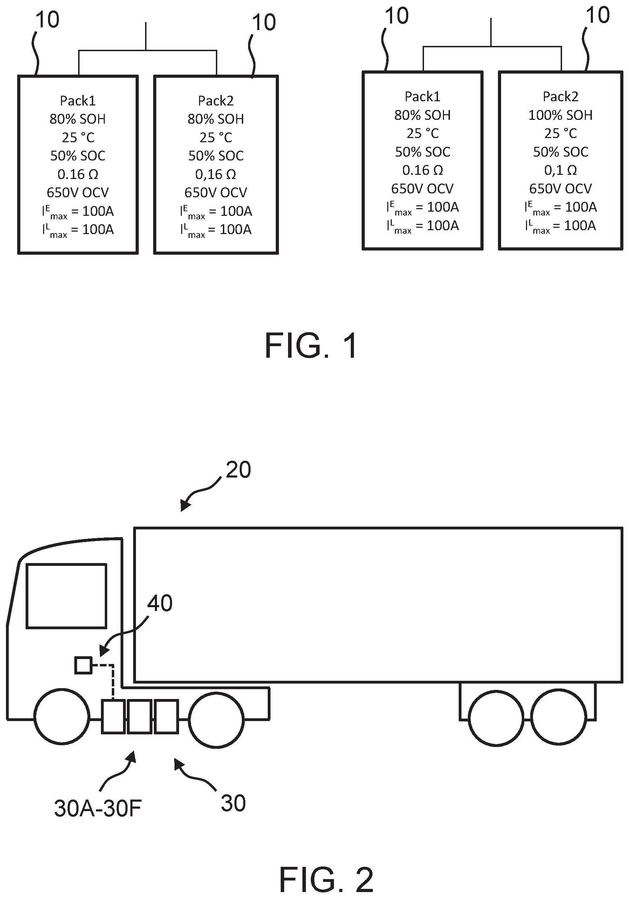

Figur 1 zeigt zwei beispielhafte Parallelschaltungen von jeweils zwei Batteriepacks 10. Während im linken Fall, die beiden Batteriepacks 10 vollkommen identisch ausgebildet sind, unterscheiden sich im rechten Fall die jeweiligen Batteriepacks 10 in ihren Alterungszuständen und Innenwiderständen. Berechnet man auf Grundlage einer Netzwerkanalyse unter Berücksichtigung der kirchhoffschen Regeln und des ohmschen Gesetzes für beide Parallelschaltungen die jeweiligen Entladeströme der Batteriepacks 10 bei einer Stromanforderung, so ergibt sich zunächst allgemein Folgendes: $\begin{matrix}{I}_{ges} = {I}_{Pack 1} + {I}_{Pack 2} \\ \to {I}_{Pack 2} = {I}_{ges} - {I}_{Pack 1}\end{matrix}$ ${U}_{Pack 1} = {U}_{OCV_Pack 1} - {R}_{Pack 1} * {I}_{Pack 1}$ $\begin{matrix}{U}_{Pack 2} = {U}_{OCV_Pack 2} - {R}_{Pack 2} * {I}_{Pack 2} \\ \to {U}_{Pack 2} = {U}_{OCV_Pack 2} - {R}_{Pack 2} * \left({I}_{ges}-{I}_{Pack 1}\right)\end{matrix}$ ${U}_{Pack 1} = {U}_{Pack 2}$ $\begin{matrix}{U}_{OCV_Pack 1} - {R}_{Pack 1} * {I}_{Pack 1} = \\ = {U}_{OCV_Pack 2} - {R}_{Pack 2} * \left({I}_{ges}-{I}_{Pack 1}\right)\end{matrix}$ ${I}_{Pack 1} = \frac{{U}_{OCV_Pack 1} - {U}_{OCV_Pack 2} + {R}_{Pack 2} ∗ {I}_{ges}}{{R}_{Pack 1} + {R}_{Pack 2}}$ ${I}_{Pack 2} = {I}_{ges} - {I}_{Pack 1}$

Bei der linken Parallelschaltung ergibt sich durch Einsetzen der entsprechenden Werte der Batteriepacks 10 gemäß Figur 1 bei einer theoretischen Stromanforderung von 200 A: ${I}_{Pack 1} = \frac{650 V - 650 V + 0.16 Ω * \left.200 A\right)}{0.16 Ω + 0.16 Ω} = \frac{32 V}{0.32 Ω} = {100 A}_{¯}$ ${I}_{Pack 2} = {I}_{ges} - {I}_{Pack 1} = 200 A - 100 A = {100 A}_{¯}$

D. h., von beiden Batteriepacks 10 fließt (symmetrisch) jeweils ein Entladestrom von 100 A, was vorliegend exakt den für die jeweiligen Batteriepacks 10 vorgegebenen aktuellen Soll-Maximalentladestromwerten (I^{E}ₘₐₓ) der Batteriepacks 10 entspricht.

Bei der rechten Parallelschaltung ergibt sich durch Einsetzen der entsprechenden Werte der Batteriepacks 10 gemäß Figur 1 bei einer theoretischen Stromanforderung von 200 A: ${I}_{Pack 1} = \frac{650 V - 650 V + 0.1 Ω * \left.200 A\right)}{0.16 Ω + 0.1 Ω} = \frac{20 V}{0.26 Ω} = {77 A}_{¯}$ ${I}_{Pack 2} = {I}_{ges} - {I}_{Pack 1} = 200 A - 77 A = {123 A}_{¯}$

D. h., von dem stärker gealterten ersten Batteriepack 10 (SOH = 80 %) würde ein Entladestrom von 77 A und von dem quasi neuen bzw. nicht gealterten zweiten Batteriepack 10 (SOH = 100 %) ein Entladestrom von 123 A fließen. Entsprechend würde hier die aktuelle Soll-Maximalentladestromwerte (I^{E}ₘₐₓ) des zweiten Batteriepacks 10 überschritten werden, weshalb hier Schäden an diesem Batteriepack 10 auftreten können. Durch unterschiedliche Ladungszustände der parallelgeschalteten Batteriepacks würde sich dieser Effekt nochmals verstärken.

Insbesondere falls, wie in der Praxis üblich, eine Strombegrenzung für das Gesamtsystem erfolgt, können sich, wie das obige Beispiel zeigt, Herausforderungen hinsichtlich eines möglichst optimalen Betriebs einer solchen Gruppe unterschiedlicher, insbesondere unterschiedlich geladener und/oder gealterter, Batteriepacks ergeben. Die bisherigen Ansätze liefern hier oftmals keine zufriedenstellenden Ergebnisse.

Die Aufgabe der Erfindung besteht darin, eine Lösung für einen verbesserten Betrieb eines Batteriesystems mit mehreren Batteriepacks bereitzustellen, mit der die Nachteile der bisherigen Lösungen vermieden werden können. Bevorzugt ist es eine Aufgabe der Erfindung, eine Lösung bereitzustellen, mit der ein möglichst sicherer Betrieb sichergestellt werden kann und das Leistungspotential des Batteriesystems möglichst komplett ausgenutzt werden kann.

Diese Aufgaben können mit den Merkmalen der unabhängigen Ansprüche gelöst werden. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Ein unabhängiger Aspekt der vorliegenden Offenbarung betrifft ein (z. B. computerimplementiertes) Verfahren. Bevorzugt dient das Verfahren zum Betreiben eines Batteriesystems für ein Kraftfahrzeug (z. B. für ein Nutzfahrzeug). Besonders bevorzugt handelt es sich bei dem Kraftfahrzeug um ein Elektrofahrzeug, insbesondere um ein Elektronutzfahrzeug. Das Batteriesystem weist mehrere, vorzugsweise elektrisch miteinander verbundene (z. B. elektrisch parallel geschaltete), Batteriepacks auf. Beispielsweise können die mehreren Batteriepacks jeweils eine Vielzahl an (z. B. elektrisch seriell verschalteter) Batteriezellen aufweisen und/oder jeweils von einem jeweiligen Batteriepack-Gehäuse umhaust sein.

Das Verfahren weist ein (z. B. automatisches) Ermitteln (z. B. Messen und/oder Berechnen) von aktuellen Ausgleichsströmen zwischen den mehreren Batteriepacks (z. B. mittels einer Vorrichtung zum Betreiben des Batteriesystems) auf, wobei die aktuellen Ausgleichsströme vorzugsweise durch unterschiedliche Ladezustände (z. B. unterschiedliche SoC-Zustände) der mehreren Batteriepacks bewirkt sind. Das Verfahren weist ferner ein (z. B. automatisches) Festlegen (z. B. mittels der Vorrichtung) einer aktuellen (z. B. gemeinsamen und/oder batteriepackübergreifenden) Entladestromgrenze, die einen von dem Batteriesystem aktuell (z. B. insgesamt) maximal abführbaren (z. B. Gesamt- oder System-)Entladestrom begrenzt, und/oder einer aktuellen (z. B. gemeinsamen und/oder batteriepackübergreifenden) Ladestromgrenze, die einen dem Batteriesystem aktuell (z. B. insgesamt) maximal zuführbaren (z. B. Gesamt- oder System-)Ladestrom begrenzt, unter Berücksichtigung der ermittelten aktuellen Ausgleichsströme auf. Beispielsweise kann die aktuelle Entladestromgrenze und/oder Ladestromgrenze dabei (z. B. betragsmäßig) umso kleiner festgelegt werden, je größer (z. B. betragsmäßig) die aktuellen Ausgleichsströme sind, und umgekehrt. Grund hierfür kann sein, dass z. B. beim Laden des Batteriesystems zusätzlich zu einem (z. B. von einer elektrischen Maschine des Kraftfahrzeugs in einem Rekuperationsbetrieb erzeugten) "äußeren" (z. B. begrenzten) Ladestrom auch Ausgleichsströme innerhalb des Batteriesystems fließen können, sodass ohne eine Berücksichtigung dieser Ausgleichsströme in Summe die aktuellen Soll-Maximalladestromwerte einzelner Batteriepacks überschritten würden. Das Verfahren weist ferner ein (z. B. automatisches) Betreiben des Batteriesystems (z. B. mittels der Vorrichtung) unter Berücksichtigung der festgelegten aktuellen Entladestromgrenze und/oder aktuellen Ladestromgrenze auf.

Vorteilhaft können dadurch bei der Aufteilung des Systemstroms auf die einzelnen Packs Schäden an den Batteriepacks bzw. eine Verletzung der Zellstromgrenzen der einzelnen Packs vermieden werden. Ferner kann dadurch insgesamt die Performance des Batteriesystems verbessert werden, da die technischen Limitierungen des Batteriesystems besser ausgenutzt werden, vorzugsweise ohne einen Vorhalt für die Ausgleichströme zu definieren.

In einem Ausführungsbeispiel können/kann das Ermitteln (der aktuellen Ausgleichsströme) und/oder das Festlegen (der aktuellen Entladestromgrenze und/oder Ladestromgrenze) während des Betreibens des Batteriesystems (z. B. automatisch) in regelmäßigen oder unregelmäßigen Zeitabständen erfolgen. Beispielsweise können/kann das Ermitteln und/oder das Festlegen (z. B. zyklisch) alle 500 ms, vorzugsweise alle 100 ms, wiederholt werden. Vorteilhaft kann dadurch eine möglichst optimale Anpassung an die jeweils vorliegenden Betriebsbedingungen erreicht werden.

Zudem oder alternativ kann das Verfahren (z. B. zumindest zeitweise) während eines (z. B. normalen) Fahrbetriebs (z. B. während eines Vortriebs) und/oder eines Rekuperationsbetriebs des Kraftfahrzeugs durchgeführt werden. Entsprechend kann der (z. B. Gesamt- oder System-)Ladestrom ein Rekuperationsladestrom sein. Bevorzugt wird das Verfahren nicht bei einem (stationären) Laden des Kraftfahrzeugs mittels einer fahrzeugexternen Ladeeinrichtung (z. B. einer Ladestation), während das Kraftfahrzeug abgestellt ist, oder bei einer Notabschaltung durchgeführt.

Zudem oder alternativ kann das Verfahren (z. B. zumindest zeitweise) durchgeführt werden, während eine Last (z. B. mindestens eine elektrische Antriebseinheit des Kraftfahrzeugs) an das Batteriesystem angeschlossen ist. Da durch einen lastbedingten Stromfluss die Effekte unterschiedlicher Alterungs- bzw. Ladungszustände der Batteriepacks in der Regel verstärkt werden, kann hier auf besonders vorteilhafte Weise ein zuverlässiger Betrieb des Batteriesystems sichergestellt werden.

In einem weiteren Ausführungsbeispiel kann das Ermitteln (der aktuellen Ausgleichsströme) ein Berechnen (oder Schätzen) der aktuellen Ausgleichsströme unter Berücksichtigung mindestens einer, vorzugsweise mehrerer, der folgenden (z. B. gemessenen oder geschätzten) Größen aufweisen:
- aktuelle Ladezustände, vorzugsweise SoC-Zustände, der mehreren Batteriepacks;
- aktuelle Spannungszustände der mehreren Batteriepacks;
- aktuelle Temperaturen der mehreren Batteriepacks;
- aktuelle (z. B. Einzel- oder Batteriepack-)Entladeströme und/oder (z. B. Einzel- oder Batteriepack-)Ladeströme der mehreren Batteriepacks;
- aktuelle Alterungszustände, vorzugsweise SoH-Zustände, der mehreren Batteriepacks;
- aktuelle Kapazitäten der mehreren Batteriepacks; und
- aktuelle Innenwiderstände der mehreren Batteriepacks.

Bevorzugt kann das Berechnen (oder Schätzen) der aktuellen Ausgleichsströme dabei auf einer (z. B. analytischen) Netzwerkanalyse des Batteriesystems beruhen, bspw. ähnlich wie im Zusammenhang mit Figur 1 dargestellt. Zudem oder alternativ kann das Berechnen (oder Schätzen) auch mittels eines (z. B. vereinfachten und/oder linearen) Batteriemodells des Batteriesystems erfolgen. Vorteilhaft können dadurch jeweilige Ausgleichsstromwerte für das Festlegen der aktuellen Entlade- bzw. Ladestromgrenze bereitgestellt werden.

In einer Ausführungsform kann das Ermitteln (der aktuellen Ausgleichsströme) ein (z. B. automatisches) Ermitteln (z. B. Messen und/oder Berechnen) von aktuellen (z. B. paarweisen) Teilausgleichsströmen zwischen jeweils zwei (Batteriepacks) der mehreren Batteriepacks aufweisen. Beispielsweise kann im Fall von drei Batteriepacks jeweils ein Teilausgleichsstrom zwischen dem ersten und zweiten, dem zweiten und dritten und dem ersten und dritten Batteriepack ermittelt werden. Weiterhin kann das Ermitteln (der aktuellen Ausgleichsströme) in dieser Ausführungsform ferner ein Überlagern (z. B. Superpositionieren und/oder Zusammenfassen) der ermittelten aktuellen Teilausgleichsströme aufweisen, vorzugsweise zum Erhalten der aktuellen Ausgleichsströme. Vorteilhaft kann dadurch eine einfache Möglichkeit zur Ausgleichsstromermittlung bereitgestellt werden.

In einer weiteren Ausführungsform kann das Festlegen (der aktuellen Entladestromgrenze und/oder Ladestromgrenze) unter Berücksichtigung von jeweiligen (z. B. individuellen) aktuellen Soll-Maximalentladestromwerten und/oder (z. B. individuellen) aktuellen Soll-Maximalladestromwerten der jeweiligen Batteriepacks erfolgen. Die Soll-Maximalentladestromwerte und/oder Soll-Maximalladestromwerte können, bspw. von einem Hersteller der Batteriepacks, vorgegeben sein und/oder vom jeweiligen Alterungszustand, jeweiligen Innenwiderstand und/oder von der jeweiligen Temperatur der jeweiligen Batteriepacks abhängig sein. Bevorzugt ist bei Entladeströmen unterhalb des Soll-Maximalentladestromwerts bzw. bei Ladeströmen unterhalb des Soll-Maximalentladestromwerts ein sicherer Betrieb des jeweiligen Batteriepacks sichergestellt, vorzugsweise ohne dass Schäden drohen.

In einer Ausführungsvariante können die jeweiligen aktuellen Soll-Maximalentladestromwerte und/oder die jeweiligen aktuellen Soll-Maximalladestromwerte (jeweils) (z. B. automatisch) mittels eines (z. B. vergebenen) Kennfelds und/oder einer (z. B. Modell-)Funktion und/oder unter Berücksichtigung mindestens einer der folgenden (z. B. gemessenen oder geschätzten) Größen ermittelt werden:
- einem aktuellen Ladezustand, vorzugsweise SoC-Zustand, des jeweiligen Batteriepacks;
- einem aktuellen Spannungszustand des jeweiligen Batteriepacks;
- einer aktuellen Temperatur des jeweiligen Batteriepacks;
- einem aktuellen (z. B. Einzel- oder Batteriepack-)Entladestrom und/oder (z. B. Einzel- oder Batteriepack-)Ladestrom des jeweiligen Batteriepacks;
- einem aktuellen Alterungszustand, vorzugsweise SoH-Zustand, des jeweiligen Batteriepacks;
- einer aktuellen Kapazität des jeweiligen Batteriepacks; und
- einem aktuellen Innenwiderstand des jeweiligen Batteriepacks.

Beispielsweise können der jeweilige aktuelle Soll-Maximalentladestromwert und/oder der jeweilige aktuelle Soll-Maximalladestromwert jeder der Batteriepacks durch entsprechendes Einsetzen eines oder mehrerer aktueller (z. B. Mess-)Werte der vorgenannten Größen in einen über ein Kennfeld oder eine (z. B. Modell-)Funktion vorgegebenen Zusammenhang ermittelt werden. Vorteilhaft kann dadurch eine möglichst optimale Anpassung der Soll-Maximalentladestromwerte bzw. Soll-Maximalladestromwerte an die jeweils vorliegenden Betriebsbedingungen erreicht werden.

In einer weiteren Ausführungsvariante kann das Festlegen (der aktuellen Entladestromgrenze und/oder Ladestromgrenze) unter Berücksichtigung mindestens eines (z. B. tiefpassgefilterten) aktuellen Gewichtungsfaktors erfolgen. Der mindestens eine aktuelle Gewichtungsfaktor kann dabei bevorzugt in Abhängigkeit eines aktuellen Ladestroms und/oder aktuellen Entladestroms des Batteriesystems angepasst werden. Vorzugsweise ist der mindestens eine aktuelle Gewichtungsfaktor somit nicht konstant, sondern variiert in Abhängigkeit von dem aktuellen (z. B. Gesamt- oder System-)Ladestrom und/oder dem aktuellen (z. B. Gesamt- oder System-)Entladestrom. Erfinderseitig wurde festgestellt, dass sich hierdurch ein besonders zuverlässiger Betrieb des Batteriesystems erreicht werden kann.

In einem Ausführungsbeispiel kann der mindestens eine aktuelle Gewichtungsfaktor einen aktuellen Widerstandsanteil, der einen aktuellen Innenwiderstandsanteil eines der mehreren Batteriepacks an einem Gesamtinnenwiderstand des Batteriesystems angibt, aufweisen. Zudem oder alternativ kann der mindestens eine aktuelle Gewichtungsfaktor einen aktuellen Stromanteil, der einen (z. B. ausgleichsstromkorrigierten und/oder reziproken) (z. B. Einzel- oder Batteriepack-)Entladestromanteil des einen der mehreren Batteriepacks an einem (bzw. dem) (z. B. ausgleichsstromkorrigierten) aktuellen (z. B. Gesamt- oder System-)Entladestrom des Batteriesystems und/oder einen (z. B. ausgleichsstromkorrigierten und/oder reziproken) (z. B. Einzel- oder Batteriepack-)Ladestromanteil des einen der mehreren Batteriepacks an einem (bzw. dem) (z. B. ausgleichsstromkorrigierten) aktuellen (z. B. Gesamt- oder System-)Ladestrom des Batteriesystems angibt, aufweisen. Bevorzugt sind der aktuelle Widerstandsanteil und der aktuelle Stromanteil dabei über einen, vorzugsweise von dem aktuellen (z. B. Gesamt- oder System-)Entladestrom und/oder aktuellen (z. B. Gesamt- oder System-)Ladestrom des Batteriesystems abhängigen, Koeffizienten miteinander verknüpft. Vorteilhaft kann dadurch in Abhängigkeit des Entlade- bzw. Ladestroms des Batteriesystems zwischen einer eher stromgetriebenen und einer eher widerstandsgetriebenen Festlegung der aktuellen Entladestromgrenze und/oder Ladestromgrenze variiert werden.

In einem weiteren Ausführungsbeispiel kann das Ermitteln (der aktuellen Ausgleichsströme) und/oder das Festlegen (der aktuellen Entladestromgrenze und/oder Ladestromgrenze) unter Berücksichtigung eines nichtlinearen (z. B. exponentiellen) Zusammenhangs zwischen jeweiligen Innenwiderständen (bzw. der jeweiligen Innenwiderstände) der mehreren Batteriepacks und jeweiligen aktuellen aktuellen (z. B. Einzel- oder Batteriepack-)Entladeströmen und/oder (z. B. Einzel- oder Batteriepack-)Ladeströmen der mehreren Batteriepacks erfolgen. Vorteilhaft kann dadurch das Festlegen (der aktuellen Entladestromgrenze und/oder Ladestromgrenze) noch weiter verbessert werden.

Zudem oder alternativ kann das Festlegen (der aktuellen Entladestromgrenze und/oder Ladestromgrenze) unter Berücksichtigung von jeweiligen (z. B. gemessenen und/oder geschätzten) Innenwiderständen der jeweiligen Batteriepacks und/oder unter Berücksichtigung von jeweiligen Innenwiderstandsanteilen der jeweiligen Batteriepacks an einem Gesamtinnenwiderstand des Batteriesystems erfolgen. Bevorzugt wird das Festlegen (der aktuellen Entladestromgrenze und/oder Ladestromgrenze) primär durch den kleinsten der Innenwiderstände und/oder den kleinsten der Innenwiderstandsanteile bestimmt. Vorteilhaft können dadurch bspw. alterungsbedingte Veränderungen der Batteriepacks mitberücksichtigt werden.

Zudem oder alternativ kann das Verfahren ferner ein (z. B. automatisches) Ausgleichen von Ladungsunterschieden von (z. B. elektrisch miteinander verschalteten) Batteriezellen innerhalb eines der mehreren Batteriepacks mittels einer Balancing-Schaltung (z. B. des einen der mehreren Batteriepacks) aufweisen. Bevorzugt erfolgt das Ausgleichen separat und/oder zeitlich getrennt von dem Ermitteln (der aktuellen Ausgleichsströme), dem Festlegen (der aktuellen Entladestromgrenze und/oder Ladestromgrenze) und/oder dem Betreiben (des Batteriesystems), beispielsweise wenn (z. B. aktuell) keine Last mit dem Batteriesystem verbunden ist und/oder das Kraftfahrzeug abgestellt und/oder mittels einer fahrzeugexternen Ladeeinrichtung geladen wird. Vorteilhaft kann dadurch ein möglichst gleiches Ladungsniveau der Batteriezellen innerhalb eines Batteriepacks erreicht werden.

In einer Ausführungsform können bei dem Festlegen die aktuelle Entladestromgrenze und die aktuelle Ladestromgrenze festgelegt werden. Bevorzugt werden die aktuelle Entladestromgrenze und die aktuelle Ladestromgrenze dabei unabhängig voneinander festgelegt und/oder unterscheiden sich (z. B. betragsmäßig bzw. in ihrem jeweiligen Wert). Beispielsweise kann die aktuelle Ladestromgrenze größer als die aktuelle Entladestromgrenze sein. Vorteilhaft kann dadurch für jede Belastung des Batteriesystems ein möglichst optimaler Betrieb sichergestellt werden.

In einer weiteren Ausführungsform kann die aktuelle Entladestromgrenze (z. B. zumindest zeitweise) mindestens 100 Ampere, vorzugsweise mindestens 200 Ampere, besonders bevorzugt mindestens 300 Ampere, betragen.

Zudem oder alternativ kann die aktuelle Ladestromgrenze (z. B. zumindest zeitweise) mindestens 150 Ampere, vorzugsweise mindestens 250 Ampere, besonders bevorzugt mindestens 350 Ampere, betragen.

In einem Ausführungsbeispiel kann das Batteriesystem eine Gesamtnennkapazität von mindestens 200 kWh, vorzugsweise mindestens 300 kWh, besonders bevorzugt mindestens 400 kWh, aufweisen. Vorteilhaft kann dadurch für den Betrieb von Nutzfahrzeugen eine ausreichende Energiemenge bereitgestellt werden.

Zudem oder alternativ kann jedes der mehreren Batteriepacks ein (z. B. geschlossenes) Gehäuse (z. B. aus Metall und/oder Kunststoff) aufweisen. Vorteilhaft kann dadurch ein einfacher Austausch der elektrischen Energiespeicher bzw. Batteriepacks ermöglicht werden.

Zudem oder alternativ kann jedes der mehreren Batteriepacks eine Vielzahl von (z. B. in mehreren versetzt zueinander angeordneten Ebenen angeordneten) Batteriezellen (z. B. Lithium-Ionen-Batteriezellen) und/oder (z. B. in mehreren versetzt zueinander angeordneten Ebenen angeordnete) Batteriemodule (z. B. umfassend mehrere Batteriezellen) aufweisen. Bevorzugt sind die Batteriezellen und/oder die Batteriemodule dabei elektrisch in Reihe miteinander verbunden. Vorteilhaft kann dadurch ein ausreichendes Spannungsniveau sichergestellt werden.

Zudem oder alternativ kann jedes der mehreren Batteriepacks eine Nennkapazität von mindestens 50 kWh, vorzugsweise mindestens 65 kWh, besonders bevorzugt mindestens 80 kWh, aufweisen. Vorteilhaft kann dadurch für den Betrieb von Nutzfahrzeugen eine ausreichende Energiemenge bereitgestellt werden.

Ein weiterer Aspekt der vorliegenden Offenbarung betrifft eine (z. B. Steuer- und/oder Verarbeitungs-)Vorrichtung zum Betreiben eines Batteriesystems für ein Kraftfahrzeug (z. B. für ein Nutzfahrzeug). Bevorzugt handelt es sich bei dem Kraftfahrzeug um ein Elektrofahrzeug, insbesondere um ein Elektronutzfahrzeug. Das Batteriesystem weist mehrere (z. B. separate und/oder unabhängig voneinander austauschbare) elektrisch miteinander verbundene oder verbindbare (z. B. elektrisch parallel geschaltete oder schaltbare) Batteriepacks auf. Die Vorrichtung kann z. B. Teil bzw. eine Einheit eines Batterie-Management-Systems sein. Die Vorrichtung ist für ein Durchführen eines Verfahrens, wie hierin beschrieben, eingerichtet. Folglich sollen die vorstehend im Zusammenhang mit dem Verfahren offenbarten Merkmale auch im Zusammenhang mit der Vorrichtung offenbart und beanspruchbar sein. Entsprechendes soll auch umgekehrt gelten. Vorteilhaft können mittels der Vorrichtung die gleichen Vorteile erzielt werden, die bereits unter Bezugnahme auf das Verfahren erläutert wurden.

Vorzugsweise weist die Vorrichtung einen (z. B. Daten-)Speicher und einen (z. B. Mikro-)Prozessor auf. Auf dem Speicher können Steuerbefehle zur Durchführung des Verfahrens hinterlegt sein, welche von dem Prozessor abgearbeitet werden können, was die Vorrichtung dazu veranlasst, das Verfahren durchzuführen. Die Vorrichtung kann somit je nach Ausbildung Steuerungsaufgaben und/oder Regelungsaufgaben und/oder Verarbeitungsaufgaben übernehmen.

Ein weiterer Aspekt der vorliegenden Offenbarung betrifft ein System für ein Kraftfahrzeug (z. B. für ein Nutzfahrzeug). Bevorzugt handelt es sich bei dem Kraftfahrzeug um ein Elektrofahrzeug, insbesondere um ein Elektronutzfahrzeug. Das System weist ein Batteriesystem auf, das mehrere (z. B. identische und/oder unabhängig voneinander austauschbare) elektrisch miteinander verbundene oder verbindbare (z. B. elektrisch parallel geschaltete oder schaltbare) Batteriepacks aufweist. Weiterhin weist das System eine Vorrichtung, wie hierin beschrieben, auf. Folglich sollen die vorstehend im Zusammenhang mit der Vorrichtung offenbarten Merkmale auch im Zusammenhang mit dem System offenbart und beanspruchbar sein. Entsprechendes soll auch umgekehrt gelten. Die Vorrichtung kann dabei bspw. mit den mehreren Batteriepacks steuerungstechnisch und/oder signaltechnisch gekoppelt und/oder verbunden sein.

Ein weiterer Aspekt der vorliegenden Offenbarung betrifft ein Kraftfahrzeug. Bevorzugt ist das Kraftfahrzeug ein Hybrid- oder Elektrofahrzeug, besonders bevorzugt ein Nutzfahrzeug, bspw. ein Hybrid-Nutzfahrzeug oder Elektro-Nutzfahrzeug. Unter einem Nutzfahrzeug kann dabei im Allgemeinen bspw. ein Fahrzeug verstanden werden, das durch seine Bauart und Einrichtung speziell zur Beförderung von Personen, zum Transport von Gütern oder zum Ziehen von Anhängerfahrzeugen ausgelegt ist. Beispielsweise kann das Nutzfahrzeug ein Lastkraftwagen, ein Sattelschlepper, ein Baustellenfahrzeug und/oder ein Omnibus sein. Das Kraftfahrzeug weist dabei eine Vorrichtung, wie hierin beschrieben, ein Batteriesystem, wie hierin beschrieben, und/oder ein System, wie hierin beschrieben, auf. Folglich sollen die vorstehend im Zusammenhang mit der Vorrichtung, dem Batteriesystem bzw. dem System offenbarten Merkmale auch im Zusammenhang mit dem Kraftfahrzeug offenbart und beanspruchbar sein. Entsprechendes soll auch umgekehrt gelten.

Im Allgemeinen kann unter dem Ausdruck "aktuell" bspw. ein "zum jeweiligen Zeitpunkt" (z. B. des Durchführens der entsprechenden Handlung) und/oder "gegenwärtig vorliegend" verstanden werden. Entsprechend können die Ausgleichsströme, die Entladestromgrenze, die Ladestromgrenze mit der Zeit variieren. Entsprechendes kann für die Ladezustände, Temperaturen, Entladeströme, Ladeströme, Alterungszustände, Kapazitäten und/oder Innenwiderstände der mehreren Batteriepacks gelten.

Die zuvor beschriebenen Ausführungsformen und Merkmale sind beliebig miteinander kombinierbar. Weitere Einzelheiten und Vorteile werden im Folgenden unter Bezug auf die beigefügten Zeichnungen beschrieben. Es zeigen:
Die zuvor beschriebenen Ausführungsformen und Merkmale sind beliebig miteinander kombinierbar. Weitere Einzelheiten und Vorteile werden im Folgenden unter Bezug auf die beigefügten Zeichnungen beschrieben. Es zeigen:
- Figur 1: schematische Darstellungen von beispielhaften Parallelschaltungen von Batteriepacks samt zugehöriger Entladestromberechnung;
- Figur 2: eine schematische Darstellung eines beispielhaften Kraftfahrzeugs gemäß einer Ausführungsform;
- Figur 3: eine schematische Darstellung eines beispielhaften Batteriepacks gemäß einer Ausführungsform;
- Figur 4: eine schematische Darstellung eines Verfahrens gemäß einer Ausführungsform;
- Figur 5: eine schematische Explosionsdarstellung des Batteriepacks von Figur 3;
- Figuren 6 und 7: Darstellungen exemplarischer zeitlicher Verläufe jeweiliger Ladeströme von sechs parallel verschalteter Batteriepacks eines beispielhaften Batteriesystems;
- Figuren 8 und 9: Darstellungen exemplarischer zeitlicher Verläufe jeweiliger Ladeströme von sechs parallel verschalteter Batteriepacks eines weiteren beispielhaften Batteriesystems;
- Figur 10: Darstellungen exemplarischer zeitlicher Verläufe jeweiliger Ausgleichsströme der sechs parallel verschalteten Batteriepacks (oben) sowie einer Entlade- und Ladestromgrenze (unten) des Batteriesystems der Figuren 8 und 9;
- Figur 11: Darstellung eines exemplarischen zeitlichen Verlaufs eines Stroms, einer Entladestromgrenze und einer Ladestromgrenze (oben) eines Batteriesystems mit sechs parallel verschalteten Batteriepacks sowie des zugehörigen Lade- bzw. Entladestatus des Batteriesystems (unten);
- Figur 12: Darstellungen exemplarischer zeitlicher Verläufe jeweiliger Ausgleichsströme (oben) und jeweiliger Temperaturverläufe (unten) der Batteriepacks des Batteriesystems von Figur 11; und
- Figuren 13 und 14: Darstellungen exemplarischer zeitlicher Verläufe jeweiliger Ladeströme der Batteriepacks des Batteriesystems von Figur 11.

Die in den Figuren dargestellten Ausführungsformen stimmen zumindest teilweise überein, sodass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

Figur 2 zeigt ein Kraftfahrzeug 20. Das Kraftfahrzeug 20 kann beispielsweise, wie dargestellt, ein Sattelschlepper sein. Bei dem Kraftfahrzeug 20 kann es sich allerdings auch um einen Lastkraftwagen, einen Omnibus, eine Baumaschine oder einen Personenkraftwagen handeln.

Bevorzugt handelt es sich bei dem Kraftfahrzeug 20 um ein Elektrofahrzeug, besonders bevorzugt um ein Elektro-Nutzfahrzeug. Entsprechend kann das Kraftfahrzeug 20 mindestens eine elektrische Antriebseinheit (nicht dargestellt) zum Vortrieb des Kraftfahrzeugs 20, z. B. einen zentralen Elektroantrieb, mehrere Elektroradnabenantriebe oder mehrere radnahe Elektroantriebe, aufweisen.

Wie in Figur 2 dargestellt, weist das Kraftfahrzeug 20 ein Batteriesystem 30 und eine Vorrichtung 40 zum Betreiben des Batteriesystems 30 auf. Die Vorrichtung 40 und das Batteriesystem 30 können bspw. auch ein (gemeinsames) System bilden.

Das Batteriesystem 30 dient bevorzugt zum Speichern elektrischer Energie und/oder zum Bereitstellen elektrischer Energie für die mindestens eine elektrische Antriebseinheit. Das Batteriesystem 30 kann über Schaltschütze mit einem Bordnetz des Kraftfahrzeugs 20 verbindbar sein.

Bevorzugt ist das Batteriesystem 30 als Hochvolt-Batteriesystem ausgeführt. Das Hochvolt-Batteriesystem kann z. B. mit einer Gleichspannung zwischen 60 V und 1,5 kV, besonders bevorzugt zwischen 400 V und 850 V, betrieben werden. Besonders bevorzugt handelt es sich bei dem Hochvolt-Batteriesystem um ein 850V-Batteriesystem.

Wie in Figur 2 dargestellt, weist das Batteriesystem 30 mehrere Batteriepacks, vorliegend die Batteriepacks 30A, 30B, 30C, 30D, 30E und 30F auf. Die Batteriepacks 30A-30F können bspw. jeweils identisch ausgebildet sein und, z. B. entlang der Fahrzeuglängsrichtung, verteilt angeordnet sein und/oder auf verschiedene Fahrzeugseiten angeordnet sein. Lediglich beispielhaft können die Batteriepacks 30A, 30B, 30C an einer linken Fahrzeuglängsaußenseite und die Batteriepacks 30D, 30E, 30F an einer rechten Fahrzeuglängsaußenseite angeordnet sein.

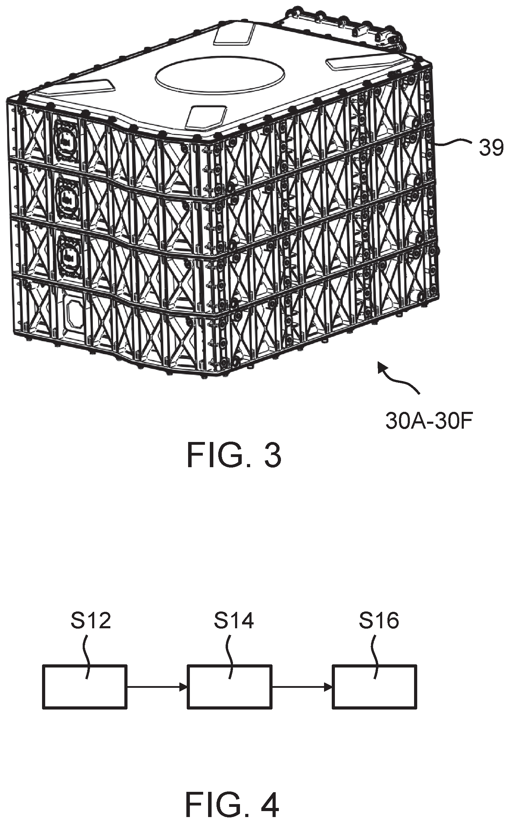

Figur 3 zeigt eine beispielhafte Ausführung eines der Batteriepacks 30A-30F.

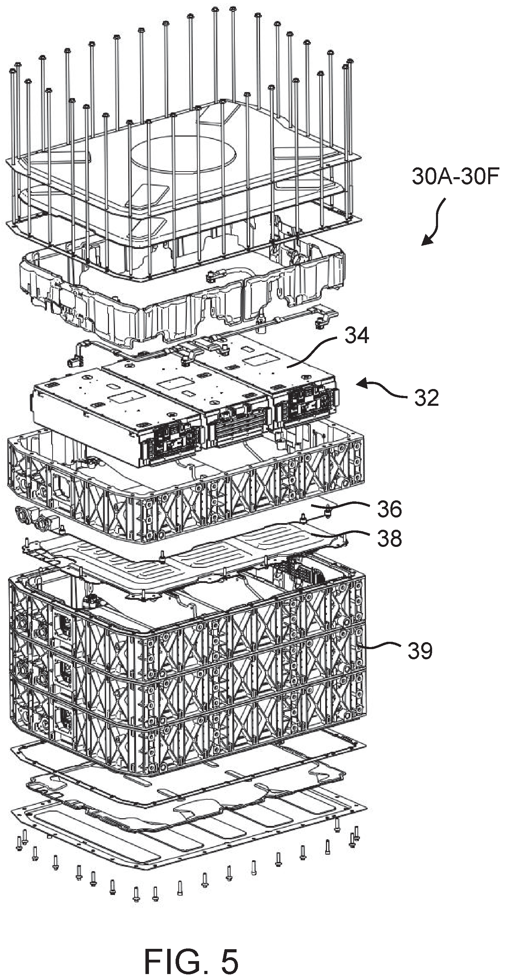

Die Batteriepacks 30A-30F können jeweils eine Nennkapazität von mindestens 60 kWh, vorzugsweise mindestens 70 kWh, besonders bevorzugt mindestens 90 kWh, aufweisen. Hierzu können die Batteriepacks 30A-30F, wie in Figur 5 exemplarisch dargestellt, mehrere, bspw. zwölf, Batteriemodule 32 mit jeweils mehreren, bspw. fünfzehn, Batteriezellen (z. B. Lithium-Ionen-Batteriezellen) umfassen.

Die Batteriezellen können bspw. als prismatische Batteriezellen ausgebildet sein. Grundsätzlich kann es sich jedoch auch um Rundzellen und/oder Pouch-Zellen handeln. Die Batteriezellen eines jeden Batteriemoduls 32 können elektrisch in Serie verbunden sein und/oder, bspw. mittels eines Rahmens, verspannt sein. Weiterhin können die Batteriemodule 32 jeweils ein Modulgehäuse 34 aufweisen, in dem die Batteriezellen des jeweiligen Batteriemoduls 32 aufgenommen sind. Die Batteriemodule 32 eines jeden Batteriepacks 30A-30F können bspw. elektrisch in Reihe geschaltet sein und/oder, wie in Figur 5 dargestellt, in mehreren planparallel versetzt zueinander angeordneten Ebenen angeordnet sein. Zwischen den Ebenen können jeweils Stützplatten 36 und/oder von einem Kühlmedium durchströmbare Kühlplatten 38 angeordnet sein. Die Batteriemodule 32, Stützplatten 36 und Kühlplatten 38 können von einem, z. B. mehrteiligen, (gemeinsamen) Gehäuse 39 des Batteriepacks 30A-30F umhaust sein. Das Gehäuse 39 kann bspw. geschlossen und/oder quaderförmig sein.

Die Batteriepacks 30A-30F können elektrisch parallel miteinander verbunden oder verbindbar sein. Insgesamt kann dadurch das Batteriesystem 30 eine Nennkapazität von mindestens 250 kWh, vorzugsweise mindestens 350 kWh, besonders bevorzugt mindestens 450 kWh, aufweisen.

Aufgrund von fertigungs- und/oder betriebsbedingten Unterschieden können die Batteriepacks 30A-30F während des Betriebs des Kraftfahrzeugs 20 unterschiedlich schnell altern. Beispielsweise können die Batteriepacks 30A-30F (zumindest zeitweise) jeweils einen unterschiedlichen Alterungszustand, vorzugsweise SoH-Zustand, und/oder einen unterschiedlichen Innenwiderstand aufweisen. Bevorzugt sind die mehreren Batteriepacks 30A-30F deshalb jeweils unabhängig voneinander austauschbar. Beispielsweise kann jedes der Batteriepacks 30A-30F dazu, z. B. über Klemm- und/oder Schraubverbinden, mechanisch lösbar am Kraftfahrzeug 20 gehalten sein und/oder, z. B. über Steckverbinden, elektrisch lösbar mit dem Bordnetz des Kraftfahrzeugs 20 verbunden sein.

Weiterhin können die Batteriepacks 30A-30F während des Betriebs des Kraftfahrzeugs 20 (zumindest zeitweise) unterschiedliche Ladungszustände, vorzugsweise SoC-Zustände, aufweisen. Entsprechend können Ausgleichsströme I_{A} zwischen den Batteriepacks 30A-30F auftreten. Insbesondere kann somit bspw. von einem stärker als ein anderes Batteriepack 30A-30F geladenen Batteriepack 30A-30F ein Ausgleichsstrom I_{A} zu dem weniger stark geladenen Batteriepack 30A-30F fließen, vorzugsweise um dadurch die jeweiligen Ladungszustände aneinander anzugleichen. Bevorzugt fließen die Ausgleichsströme I_{A} dabei ausschließlich innerhalb des Batteriesystems 30 bzw. zwischen den jeweiligen Batteriepacks 30A-30F.

Die Batteriepacks 30A-30F können ferner (zumindest zeitweise) jeweils eine unterschiedliche Temperatur aufweisen. Bevorzugt weisen die Batteriepacks 30A-30F jedoch alle eine gleiche Temperatur auf, bspw. durch entsprechende (aktive) Temperierung der Batteriepacks 30A-30F.

Jedes der Batteriepacks 30A-30F kann einen (z. B. individuellen) Soll-Maximalentladestromwert I^{E}ₘₐₓ und/oder einen (z. B. individuellen) Soll-Maximalladestromwert I^{L}ₘₐₓ aufweisen. Bevorzugt gibt der Soll-Maximalentladestromwert I^{E}ₘₐₓ an, mit welchem (z. B. anteiligen) Entladestrom I_{E,i} das jeweilige Batteriepack 30A-30F maximal entladen werden soll, bspw. um Schäden an dem Batteriepack 30A-30F zu vermeiden. Entsprechend kann der Soll-Maximalladestromwert I^{L}ₘₐₓ angeben, mit welchem (z. B. anteiligen) Ladestrom I_{L,i} das jeweilige Batteriepack 30A-30F maximal geladen werden soll, bspw. um Schäden an dem Batteriepack 30A-30F zu vermeiden.

Bevorzugt stellen der Soll-Maximalentladestromwert I^{E}ₘₐₓ und der Soll-Maximalladestromwert I^{L}ₘₐₓ jedoch keine gezielten Begrenzungen für den jeweiligen Entladestrom I_{E,i} bzw. Ladestrom I_{L,i} dar. Beispielsweise kann der jeweilige Entladestrom I_{E,i} auch, vorzugsweise nur kurzzeitig, über dem Soll-Maximalentladestromwert I^{E}ₘₐₓ und der jeweilige Ladestrom I_{L,i} auch, vorzugsweise nur kurzzeitig, über dem Soll-Maximalladestromwert I^{L}ₘₐₓ liegen, wobei dann in der Regel Schäden an dem jeweiligen Batteriepack 30A-30F drohen.

Der Soll-Maximalentladestromwert I^{E}ₘₐₓ bzw. der Soll-Maximalladestromwert I^{L}ₘₐₓ kann bspw. vom Hersteller der Batteriepacks 30A-30F vorgegeben sein. Der Soll-Maximalentladestromwert I^{E}ₘₐₓ bzw. der Soll-Maximalladestromwert I^{L}ₘₐₓ kann fest vorgegeben sein und/oder (zeitlich) konstant sein. Bevorzugt werden der Soll-Maximalentladestromwert I^{E}ₘₐₓ und der Soll-Maximalladestromwert I^{L}ₘₐₓ jedoch an aktuelle Betriebsbedingungen angepasst. Beispielsweise kann der Soll-Maximalentladestromwert I^{E}ₘₐₓ bzw. der Soll-Maximalladestromwert I^{L}ₘₐₓ (z. B. individuell für das jeweilige Batteriepacks 30A-30F) unter Berücksichtigung eines aktuellen Ladezustands (SoC-Zustands) des jeweiligen Batteriepacks 30A-30F, einer aktuellen Temperatur des jeweiligen Batteriepacks 30A-30F, eines aktuellen Entladestroms I_{E,i} bzw. Ladestroms I_{L,i} des jeweiligen Batteriepacks 30A-30F, eines aktuellen Alterungszustands (SoH-Zustands) des jeweiligen Batteriepacks 30A-30F, einer aktuellen Kapazität des jeweiligen Batteriepacks 30A-30F und/oder eines aktuellen Innenwiderstands des jeweiligen Batteriepacks 30A-30F angepasst werden.

Die Vorrichtung 40 kann, wie beispielhaft in Figur 1 dargestellt, als eine zentrale Vorrichtung ausgebildet sein, die allen Batteriepacks 30A-30F des Batteriesystems 30 zugeordnet ist. Grundsätzlich kann die Vorrichtung 40 allerdings auch dezentral ausgebildet sein, bspw. in Form mehrerer Module bzw. Einheiten, die bspw. jeweils einem Batteriepack 30A-30F zugeordnet sind und miteinander, z. B. über Signalleitungen und/oder einen Datenbus, kommunizieren.

Die Vorrichtung 40 dient zum Betreiben eines Batteriesystems 30. Entsprechend können die Vorrichtung 40 und das Batteriesystem 30 über mindestens eine Signalleitung (gestrichelt dargestellt) miteinander verbunden sein.

Die Vorrichtung 40 kann über eine Kommunikationseinrichtung (nicht dargestellt) verfügen, die für ein (z. B. drahtloses oder kabelgebundenes) Empfangen von Signalen und/oder Informationen (z. B. von Ladezuständen, Kapazitäten, Temperaturen, Alterungszuständen, Innenwiderständen Rᵢ) von dem Batteriesystem 30 eingerichtet ist. Über die Kommunikationseinrichtung können auch Signale (z. B. Steuerbefehle) zum Betreiben des Batteriesystems 30 an das Batteriesystem 30 bzw. die Batteriepacks 30A-30F ausgegeben werden.

Weiterhin kann die Vorrichtung 40 über eine entsprechende Elektronik (z. B. ausgeführt als eine Treiberschaltung oder mit Mikroprozessor(en) und Datenspeicher) verfügen. Die Vorrichtung 40 kann dabei als Teil eines Batteriemanagementsystems des Kraftfahrzeugs 20 ausgeführt sein. Vorzugsweise ist die Vorrichtung 40 für ein Durchführen eines Verfahrens, wie hierin offenbart, konfiguriert.

Figur 4 zeigt schematisch ein Verfahren zum Betreiben eines Batteriesystems 30, welches bspw. wie hierin beschrieben ausgebildet sein kann. Das Verfahren kann ferner beispielsweise im Betrieb der Vorrichtung 40 angewendet und/oder durchgeführt werden.

In einem Schritt S12 werden aktuelle Ausgleichsströme I_{A} zwischen mehreren Batteriepacks 30A-30F des Batteriesystems 30 ermittelt. Die aktuellen Ausgleichsströme I_{A} werden hierbei vorzugsweise durch unterschiedliche Ladezustände der mehreren Batteriepacks 30A-30F bewirkt. Die Ladezustände der mehreren Batteriepacks 30A-30F können dabei bspw. jeweils durch entsprechende Mittelung über die jeweiligen Batteriezellen eines Batteriepacks 30A-30F erhalten sein.

Beispielsweise kann das Ermitteln der aktuellen Ausgleichsströme I_{A} dadurch erfolgen, dass zunächst aktuelle Teilausgleichsströme zwischen allen möglichen Batteriepackpaaren der mehreren Batteriepacks 30A-30F, bspw. auf Grundlage einer Netzwerkanalyse (z. B. unter Verwendung des ohmschen Gesetzes und der kirchhoffschen Regeln) bzw. eines (z. B. vereinfachten und/oder linearen) Batteriemodells des Batteriesystems 30, berechnet werden.

Hierbei können bspw. aktuelle Ladezustände, aktuelle Spannungszustände, aktuelle Temperaturen, aktuelle Entladeströme bzw. Ladeströme, aktuelle Alterungszustände, aktuelle Kapazitäten und/oder aktuelle Innenwiderstände der mehreren Batteriepacks 30A-30F berücksichtigt werden. Die in diesem Zusammenhang benötigten Größen bzw. Werte können bspw. geschätzt oder von Sensoren der Vorrichtung 40 bereitgestellt werden.

Die so ermittelten Teilausgleichsströme - vorliegend z. B. ein erster Teilausgleichsstrom zwischen dem Batteriepack 30A und dem Batteriepacks 30B, ein zweiter Teilausgleichsstrom zwischen dem Batteriepack 30A und dem Batteriepacks 30C, ein dritter Teilausgleichsstrom zwischen dem Batteriepack 30A und dem Batteriepacks 30D, ..., und ein fünfzehnter Teilausgleichsstrom zwischen dem Batteriepack 30E und dem Batteriepacks 30F - können anschließend (unter Berücksichtigung ihrer jeweiligen Richtung bzw. ihres jeweiligen Vorzeichens) überlagert bzw. superpositioniert werden, um den von jedem der Batteriepacks 30A-30F jeweils zu oder abfließenden Ausgleichsstrom I_{A} zu erhalten. Lediglich beispielhaft kann das Ermitteln letztlich ergeben, dass von dem ersten Batteriepack 30A ein Ausgleichsstrom I_{A,1} von 30 Ampere abfließt, wobei bspw. 20 Ampere hiervon zu dem zweiten Batteriepack 30B und 10 Ampere zu dem dritten Batteriepack 30C fließen können, und von dem vierten Batteriepack 30D ein Ausgleichsstrom I_{A,4} von 20 Ampere abfließt, wobei bspw. 10 Ampere hiervon zu dem fünften Batteriepack 30E und 10 Ampere zu dem sechsten Batteriepack 30F fließen können.

Alternativ können die Ausgleichsströme I_{A} auch gezielt gemessen werden, bspw. mittels entsprechender Messschaltungen.

In einem Schritt S14 wird unter Berücksichtigung der ermittelten aktuellen Ausgleichsströme I_{A} eine aktuelle Entladestromgrenze I^{E}_{Lim}, die einen von dem Batteriesystem 30 aktuell maximal abführbaren (z. B. Gesamt-)Entladestrom I_{E} (z. B. zu einer an das Batteriesystem 30 angeschlossenen Last) begrenzt, festgelegt. Zudem oder alternativ kann unter Berücksichtigung der ermittelten aktuellen Ausgleichsströme I_{A} eine (auch) eine aktuellen Ladestromgrenze I^{L}_{Lim}, die einen dem Batteriesystem 30 aktuell maximal zuführbaren (z. B. gesamt-)Ladestrom I_{L} begrenzt, festgelegt werden, aus Gründen der Übersichtlichkeit wird im Folgenden jedoch vorrangig nur die Entladestromgrenze I^{E}_{Lim} diskutiert.

Das Festlegen kann bspw. unter Berücksichtigung von jeweiligen aktuellen Soll-Maximalentladestromwerten I^{E}ₘₐₓ der jeweiligen Batteriepacks 30A-30F erfolgen. Die aktuellen Soll-Maximalentladestromwerte I^{E}ₘₐₓ können bspw. auf der Grundlage aktueller Ladezustände, aktueller Spannungszustände, aktueller Temperaturen, aktueller (jeweiliger) Entladeströme, aktueller Alterungszustände, aktueller Kapazitäten und/oder aktueller Innenwiderstände der jeweiligen Batteriepacks 30A-30F ermittelt werden. Auch hier können die entsprechenden Größen bzw. Werte bspw. geschätzt oder von Sensoren der Vorrichtung 40 bereitgestellt werden. Das Ermitteln der aktuellen Soll-Maximalentladestromwerte I^{E}ₘₐₓ kann bspw. anhand eines Kennfelds und/oder über einen durch eine, z. B. empirisch, semi-empirisch oder theoretisch ermittelte Modellfunktion vorgegebenen Zusammenhang, insbesondere unter Verwendung der vorgenannten Größen, erfolgen. Das Kennfeld bzw. die Modellfunktion kann in einem Speicher der Vorrichtung 40 hinterlegt sein.

Zudem oder alternativ kann das Festlegen (auch) durch ein direktes Berücksichtigen der jeweiligen Innenwiderstände der jeweiligen Batteriepacks erfolgen.

Im Folgenden ist hierzu beispielhaft eine bevorzugte Variante zum Festlegen der aktuellen Entladestromgrenze I^{E}_{Lim} offenbart. Es versteht sich allerdings, dass die hier diskutierte Art des Festlegens der aktuellen Entladestromgrenze I^{E}_{Lim} lediglich als ein mögliches Beispiel zu verstehen ist und auch Abwandlungen hiervon möglich sind.

Gemäß der vorliegenden Ausführungsform wird für jeden der Batteriepacks 30A-30F ein (aktueller) jeweiliger Gewichtungsfaktor f_{W,i} bestimmt. ${f}_{W , i} = a ∗ {f}_{C , i} + \left(1-a\right) ∗ {f}_{R , i}$

Der Index i referenziert hierbei vorzugsweise auf die jeweiligen Batteriepacks 30A-30F, d. h. durchläuft vorliegend bspw. die sechs Batteriepacks 30A bis 30F.

Der jeweilige Gewichtungsfaktor f_{W,i} umfasst vorliegend beispielhaft einen (aktuellen) jeweiligen Stromanteil f_{C,i} und einen (aktuellen) jeweiligen Widerstandsanteil f_{R,i}.

Der jeweilige Stromanteil f_{C,i} kann bspw. durch den Quotienten aus der Summe der Differenzen der Entladeströme I_{E,i} der jeweiligen Batteriepacks 30A-30F und der jeweiligen Ausgleichsströme I_{A,i} der jeweiligen Batteriepacks 30A-30F über alle Batteriepacks 30A-30F und der Differenz des jeweiligen Entladestroms I_{E,i} des jeweiligen Batteriepacks 30A-30F des jeweiligen Ausgleichsstroms I_{A,i} der jeiligen Batteriepacks 30A-30F gegeben sein. ${f}_{C , i} = \frac{{\sum }_{i} \left({I}_{E , i}-{I}_{A , i}\right)}{\left({I}_{E , i}-{I}_{A , i}\right)}$

Der jeweilige Widerstandsanteil f_{R,i} kann durch den Quotienten aus dem (aktuellen) jeweiligen Innenwiderstand Rᵢ des jeweiligen Batteriepacks 30A-30F und dem Gesamtinnenwiderstand R_{Total} des Batteriesystems 30 gegeben sein. ${f}_{R , i} = \frac{{R}_{i}}{{R}_{Total}}$

Der jeweilige Stromanteil f_{C,i} und jeweilige Widerstandsanteil f_{R,i} sind dabei über den oben ausgeführten Zusammenhang, umfassend den Koeffizienten a, miteinander verknüpft. Vorzugsweise nimmt der Koeffizient a abhängig von dem aktuellen (Gesamt-)Entladestrom I_{E} des Batteriesystems 30 dabei Werte zwischen 0 und 1 an, sodass das Festlegen der aktuellen Entladestromgrenze I^{E}_{Lim} - abhängig vom Entladestrom I_{E} - eher "stromgetriebenen" und einer eher "widerstandsgetriebenen" erfolgen kann. Lediglich beispielhaft kann der Koeffizienten a (zumindest abschnittsweise) linear dem Entladestrom I_{E} folgen.

Der Gewichtungsfaktor f_{W,i} kann mittels eines Tiefpass mit einer Zeitkonstante τ gefiltert werden und dadurch f_{WTP,i} erhalten werden. ${f}_{WTP , i} = TP \left({f}_{W , i}, τ\right)$

Die aktuellen Entladestromgrenze I^{E}_{Lim} kann letztlich als (globales) Minimum aller mittels ihres jeweiligen Gewichtungsfaktors f_{W,i} gewichteten Differenzen der jeweiligen Soll-Maximalentladestromwerte I^{E}ₘₐₓ und jeweiligen Ausgleichsströme I_{A,i} der jeweiligen Batteriepacks 30A-30F festgelegt werden, wobei bevorzugt noch eine Multiplikation mit der Batteriepackanzahl, vorliegend bspw. sechs, erfolgen kann. ${I}_{E , Lim} = min \left({f}_{WTP , i}∗\left({I}_{max}^{E}-{I}_{A , i}\right)\right)$

In einem Schritt S16 wird das Batteriesystem 30 unter Berücksichtigung der festgelegten aktuellen Entladestromgrenze I^{E}_{Lim} betrieben. Beispielsweise kann das Batteriesystem 30 so betrieben werden, dass keine (Gesamt-)Entladeströme I_{E} größer als die festgelegte Entladestromgrenze I^{E}_{Lim} aus dem Batteriesystem 30 entnehmbar sind. Dies kann bspw. durch entsprechende Strombegrenzungs- und/oder Stromregelungsschaltungen realisiert werden.

Bevorzugt wird das Ermitteln (S12) und/oder Festlegen (S14) während des Betreibens des Batteriesystems 30 zyklisch wiederholt, beispielsweise alle 500 ms, besonders bevorzugt alle 100 ms. Es versteht sich, dass hierbei jeweils die aktuell geltenden Betriebsgrößen berücksichtigt werden, sodass (kontinuierlich) ein Anpassen an sich verändernde Betriebsbedingungen ermöglicht wird. Besonders bevorzugt wird das Verfahren ferner während eines Fahrbetriebs des Kraftfahrzeugs 20 durchgeführt. Entsprechend kann der Ladestrom I_{L} bspw. der mindestens einen elektrischen Antriebseinheit zugeführt werden und/oder der Entladestrom I_{E} von der in einem Rekuperationsbetrieb betriebenen mindestens einen elektrischen Antriebseinheit stammen.

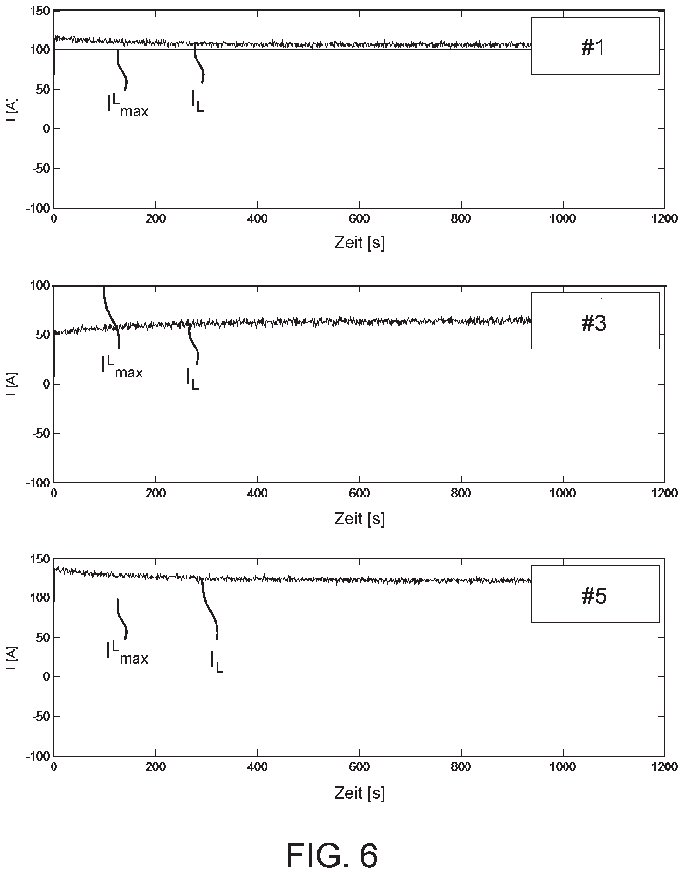

Die Figuren 6 bis 9 zeigen zwei unterschiedliche Situationen von beispielhaften zeitlichen Verläufen von jeweiligen (Einzel-)Ladeströmen I_{L,i} von sechs parallel verschalteten Batteriepacks 30A-30F bei einer (konstanten) Temperatur von 25 °C, wobei die Batteriepacks 30A-30F anfänglich unterschiedliche Ladezustände aufweisen. Das erste Batteriepack 30A weist dabei vorliegend anfänglich einen SoC-Wert von 67 %, das zweite Batteriepack 30B einen SoC-Wert von 69 %, das dritte Batteriepack 30C einen SoC-Wert von 71 %, das vierte Batteriepack 30D einen SoC-Wert von 66 %, das fünfte Batteriepack 30E einen SoC-Wert von 65% und das sechste Batteriepack 30F einen SoC-Wert von 72 % auf. Ferner weist jedes des Batteriepacks 30A-30F jeweils (aktuell) einen Soll-Maximalladestromwert I^{L}ₘₐₓ von 100 A auf. Das Batteriesystem 30 wird vorliegend mit einem (Gesamt-)Ladestrom von 530 A beaufschlagt.

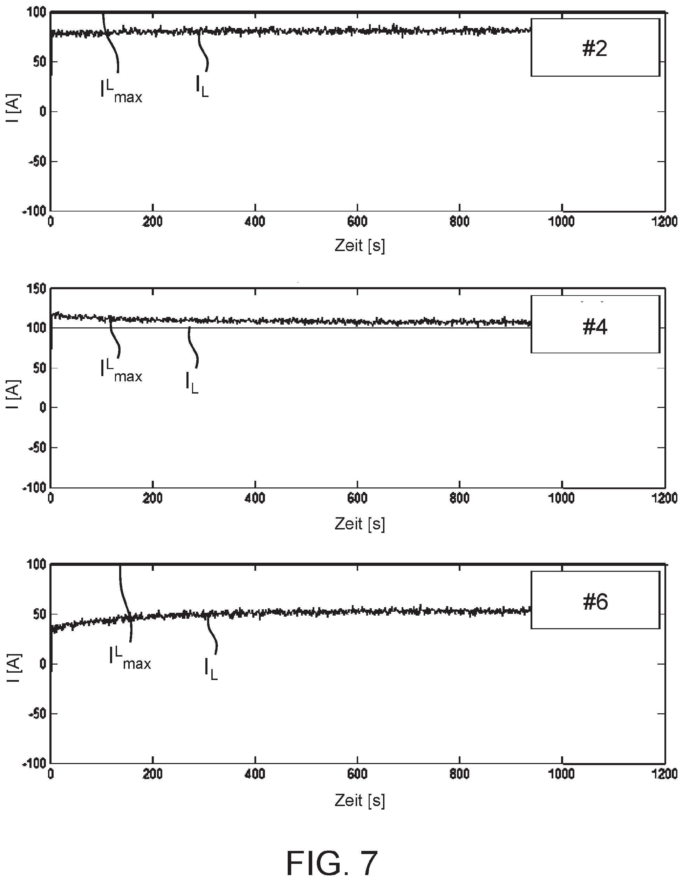

In dem in den Figuren 6 und 7 dargestellten Fall erfolgt keine Ladestrombegrenzung und insbesondere keine Berücksichtigung von Ausgleichsströmen I_{A} zwischen den Batteriepacks 30A-30F. Aufgrund der zwischen den Batteriepacks 30A-30F zusätzlich fließenden Ausgleichströme I_{A} als Folge der unterschiedlichen Ladezustände wird bei dem ersten Batteriepack 30A, dem vierten Batteriepack 30D und dem fünften Batteriepack 30E in dem vorliegenden Fall der Soll-Maximalladestromwert I^{L}ₘₐₓ von 100 A überschritten.

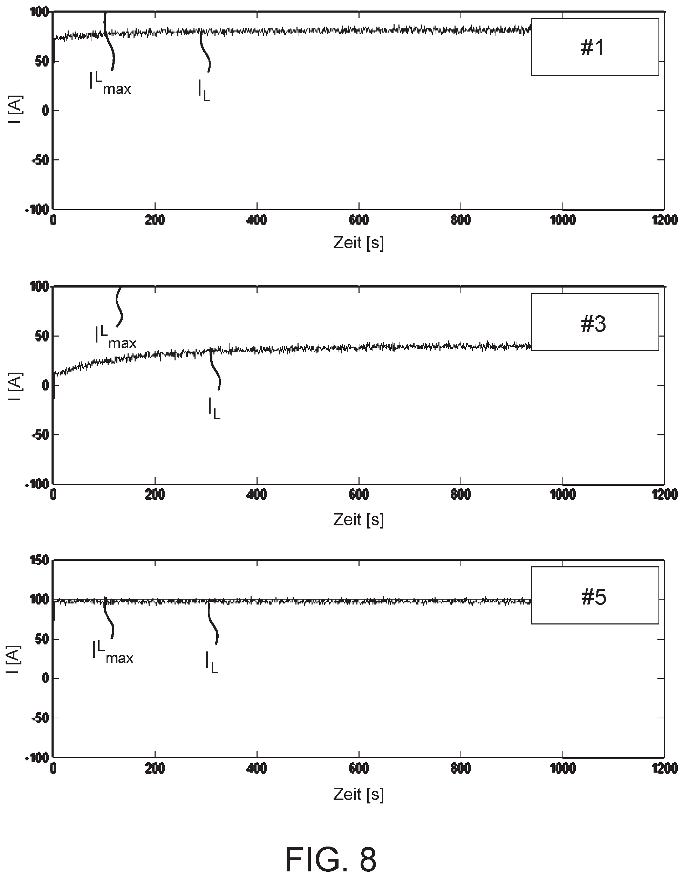

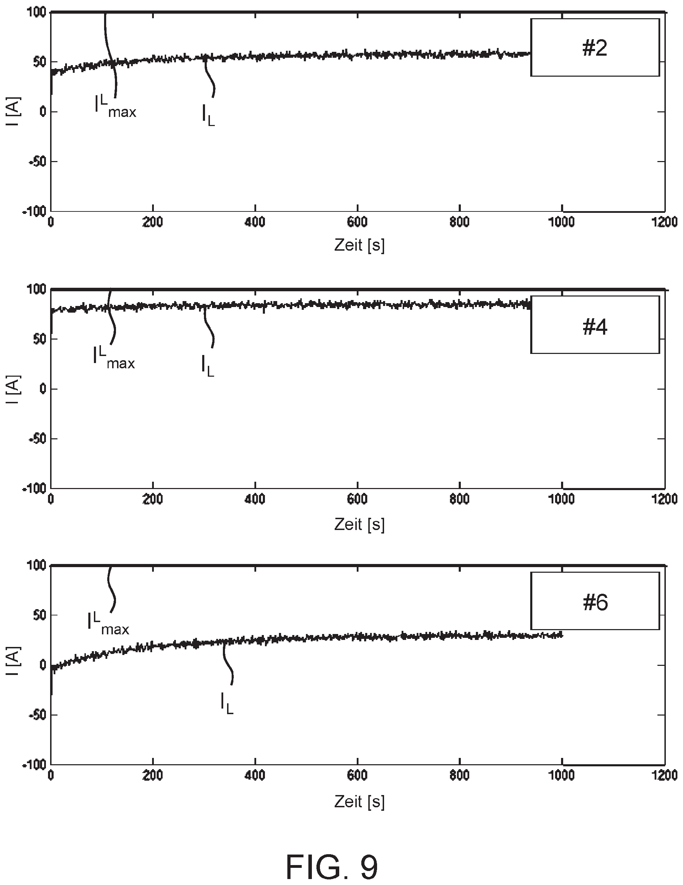

In dem in den Figuren 8 und 9 dargestellten Fall erfolgt ein Festlegen einer aktuellen Ladestromgrenze I^{L}_{Lim} unter Berücksichtigung der Ausgleichsströme I_{A}, wie hierin beschrieben. Wie aus den jeweiligen (Einzel-)Ladeströmen I_{L,i} der Batteriepacks 30A-30F ersichtlich ist, wird in keinem Fall der jeweilige Soll-Maximalladestromwert I^{L}ₘₐₓ von 100 A überschritten. Weiterhin ist ersichtlich, dass das fünfte Batteriepack 30E mit dem niedrigsten anfänglichen SoC-Wert von 65 % die Gesamtstromaufnahme limitiert.

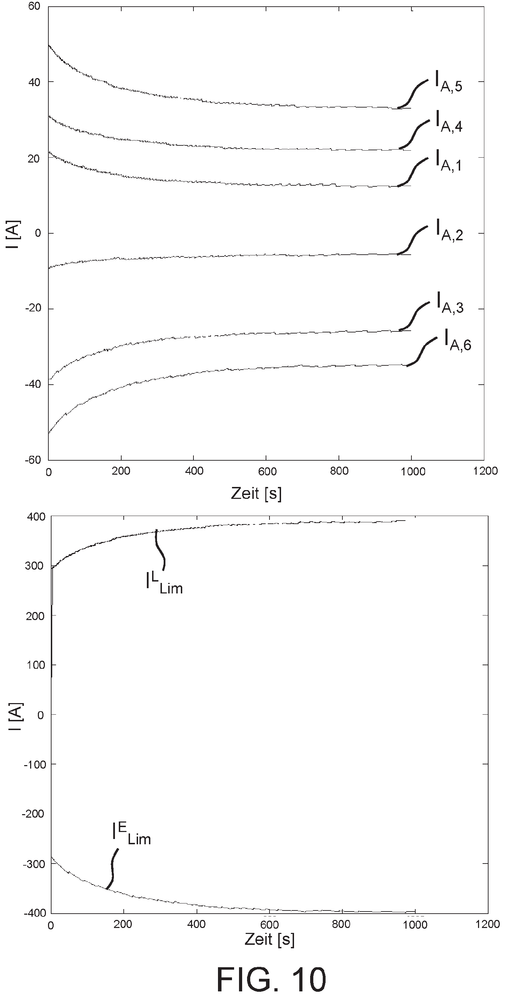

Figur 10 oben zeigt die in dem in den Figuren 8 und 9 dargestellten Fall fließenden Ausgleichsströme I_{A} der jeweiligen Batteriepacks 30A-30F. Ein positives Vorzeichen der Ströme zeigt hierbei einen in Richtung des jeweiligen Batteriepacks 30A-30F gerichteten Stromfluss, d. h. ein effektives Laden des jeweiligen Batteriepacks 30A-30F, an, während ein negatives Vorzeichen einen von dem jeweiligen Batteriepack 30A-30F weg gerichteten Stromfluss, d. h. ein effektives Entladen des jeweiligen Batteriepacks 30A-30F, anzeigt. Wie aus der oberen Darstellung von Figur 10 ersichtlich ist, fließen von den anfänglich am stärksten geladenen Batteriepacks, nämlich dem zweiten Batteriepack 30B, dem dritten Batteriepack 30C und dem sechsten Batteriepack 30F, jeweils Ladungen zu den anfänglich weniger stark geladenen Batteriepacks, nämlich zu dem ersten Batteriepack 30A, dem vierten Batteriepack 30D und dem fünften Batteriepack 30E, ab. Über die Zeit nehmen die Ausgleichsströme I_{A} dabei ab, ein vollständiges Angleichen der Ladezustände wird im vorliegenden Fall jedoch nicht erreicht, sodass zu jedem Zeitpunkt Ausgleichsströme I_{A} im System vorhanden sind.

Figur 10 unten zeigt den zeitlichen Verlauf der in dem in den Figuren 8 und 9 dargestellten Fall festgesetzte (batteriepackübergreifende) Ladestromgrenze I^{L}_{Lim} (und Entladestromgrenze I^{E}_{Lim}) des Batteriesystems 30. Wie aus Figur 10 ersichtlich ist, ändert sich die Ladestromgrenze I^{L}_{Lim} des Batteriesystems 30 in Abhängigkeit von den Ausgleichsströmen I_{A}. Zu Zeiten (betragsmäßig) relativ hoher Ausgleichsströme I_{A}, bspw. in dem Bereich zwischen 0 und 100 Sekunden, ist die Ladestromgrenze I^{L}_{Lim} des Batteriesystems 30, d. h. der dem (gesamten) Batteriesystem 30 maximal zuführbare (z. B. Gesamt-)Ladestromwert I_{L}, niedriger als zu Zeiten (betragsmäßig) relativ niedriger Ausgleichsströme I_{A}, bspw. in dem Bereich zwischen 800 und 1000 Sekunden. Wie vorstehend ausgeführt, kann dadurch sichergestellt werden, dass die jeweiligen Soll-Maximalladestromwerte I^{L}ₘₐₓ der jeweiligen Batteriepacks 30A-30F eingehalten und damit Schäden an den Batteriepacks 30A-30F vermieden werden.

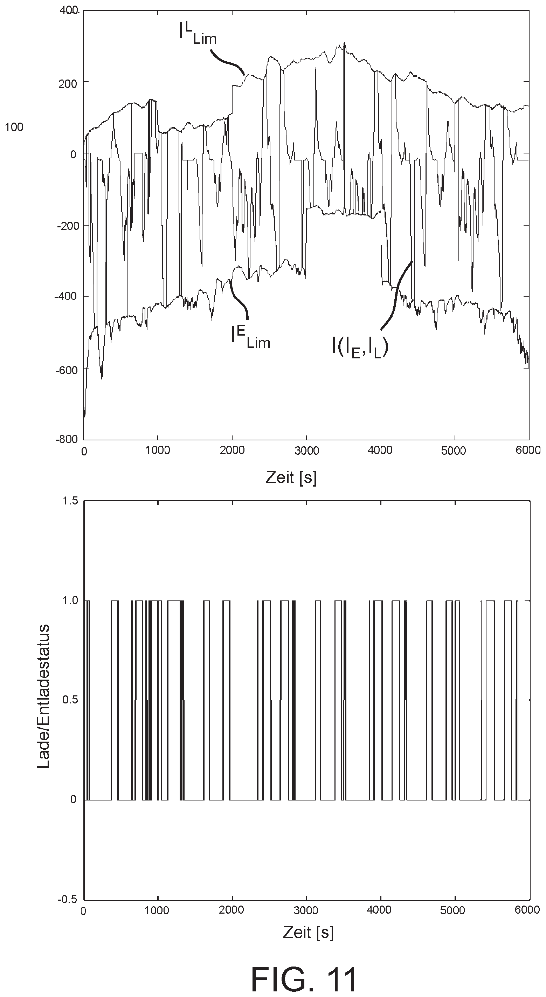

Figur 11 oben zeigt einen exemplarischen zeitlichen Verlauf des zu bzw. von einem Batteriesystem 30, aufweisend sechs parallel geschaltete Batteriepacks 30A-30F, hin- bzw. abfließenden (Gesamt-)Stroms und die zugehörigen Verläufe der (batteriepackübergreifenden) Ladestromgrenze I^{L}_{Lim} und der (batteriepackübergreifenden) Entladestromgrenze I^{E}_{Lim}. Positive Stromwerte entsprechen hierbei wiederum einem Laden des Batteriesystems 30 bzw. Ladeströmen I_{L} des Batteriesystems 30, während negative Stromwerte ein Entladen des Batteriesystems 30 bzw. Entladeströme I_{E} des Batteriesystems 30 anzeigen. Die Batteriepacks 30A-30F weisen hierbei wiederum unterschiedliche Ladezustände auf, sodass vorliegend wiederum Ausgleichsströme I_{A} zwischen den Batteriepacks 30A-30F fließen.

In dem gezeigten beispielhaften Fall weist das erste Batteriepack 30A anfänglich einen SoC-Wert von 80 %, das zweite Batteriepack 30B einen SoC-Wert von 78 %, das dritte Batteriepack 30C einen SoC-Wert von 76 %, das vierte Batteriepack 30D einen SoC-Wert von 80 %, das fünfte Batteriepack 30E einen SoC-Wert von 77 % und das sechste Batteriepack 30F einen SoC-Wert von 79 % auf.

In Figur 11 oben ist zu erkennen, dass sich über die Zeit Entladephasen und Lade- bzw. Rekuperationsphasen abwechseln, was in der unteren Darstellung von Figur 11 nochmal veranschaulicht wird. Ein Wert von 0 zeigt hier an, dass das Batteriesystem 30 aktuell entladen wird, während ein Wert von 1 anzeigt, dass das Batteriesystem 30 aktuell geladen wird.

Wie aus der Darstellung in Figur 11 oben ersichtlich ist, wird sowohl die Ladestromgrenze I^{L}_{Lim} als auch die Entladestromgrenze I^{E}_{Lim} kontinuierlich angepasst, wobei sich ihr jeweiliger absoluter Betrag unterscheidet. Vorliegend ist die Entladestromgrenze I^{E}_{Lim} in der Regel betragsmäßig größer als die Ladestromgrenze I^{L}_{Lim} festgelegt. Die Entladestromgrenze I^{E}_{Lim} und die Ladestromgrenze I^{L}_{Lim} sind hierbei wiederum unter Berücksichtigung der Ausgleichsströme I_{A} zwischen den Batteriepacks 30A-30F, entsprechend dem oben beschriebenen Vorgehen, festgelegt.

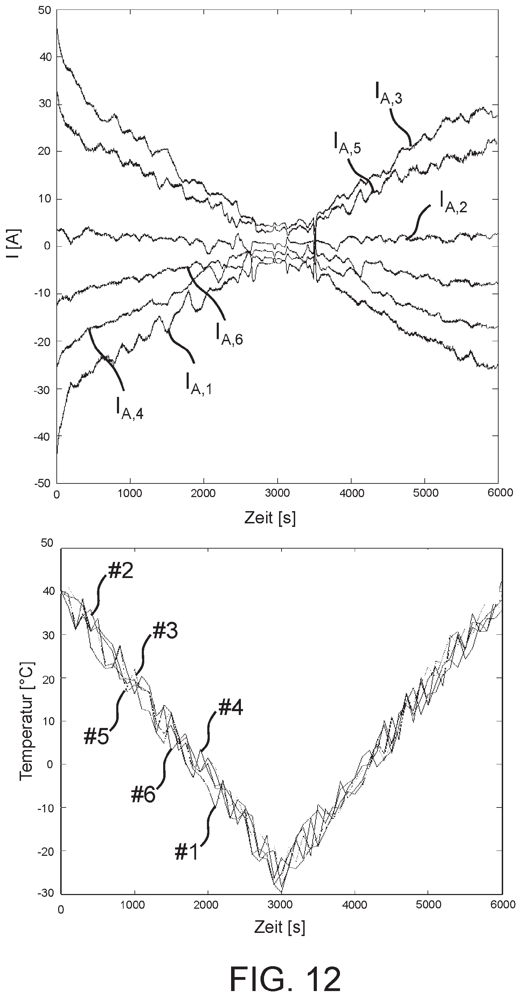

Der zeitliche Verlauf der Ausgleichsströme I_{A} des Systems von Figur 11 ist hierbei in Figur 12 oben dargestellt, wobei die Besonderheit hier besteht, dass die Temperatur der Batteriepacks 30A-30F vorliegend nicht konstant ist, sondern gemäß dem in Figur 12 unten dargestellten Verlauf über die Zeit variiert. Entsprechend nehmen die Ausgleichsströme I_{A} aufgrund einer eingeschränkten Ladungsträgermobilität mit sinkender Temperatur ab und nehmen mit steigender Temperatur anschließend wieder zu. Auch hier findet wiederum ein Ladungsübertrag von den anfänglich stärker geladenen Batteriepacks 30A, 30D und 30F zu den anfänglich weniger stark geladenen Batteriepacks 30B, 30C und 30E statt, wobei auch hier zu jedem Zeitpunkt Ausgleichsströme I_{A} im System vorhanden sind.

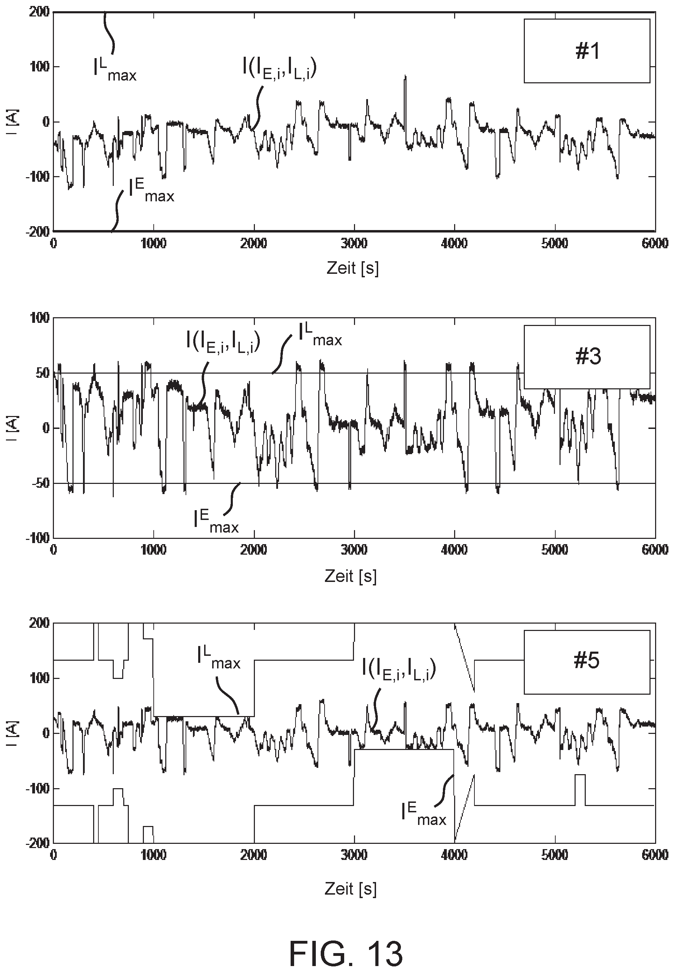

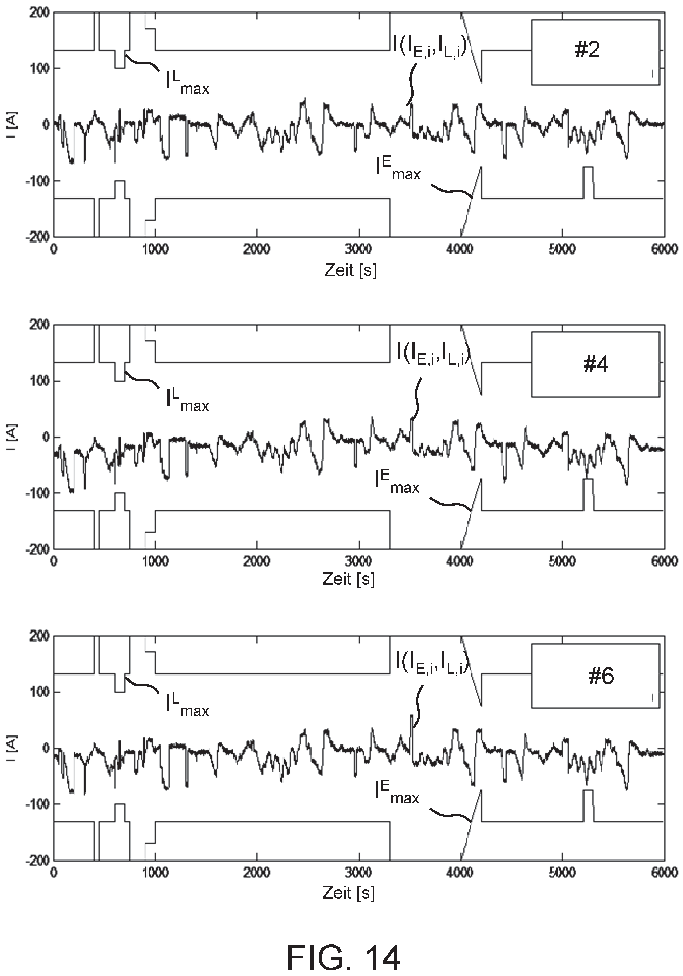

Die Figuren 13 und 14 zeigen die zugehörigen zeitlichen Verläufe der jeweiligen (Einzel-)Ströme, der jeweiligen Soll-Maximalentladestromwerte I^{E}ₘₐₓ und der jeweiligen Soll-Maximalladestromwerte I^{L}ₘₐₓ der Batteriepacks 30A-30F. Analog zum Gesamtstrom des Battersystems 30 (Figur 11 oben) umfassen auch die jeweiligen Einzelströme der Batteriepacks 30A-30F vorliegend zeitweise jeweilige Ladeströme I_{L,i} als auch zeitweise jeweilige Entladeströme I_{E,i}. Durch ein entsprechendes Festlegen der aktuellen Ladestromgrenze I^{L}_{Lim} und Entladestromgrenze I^{E}_{Lim} jeweils unter Berücksichtigung der Ausgleichsströme I_{A}, werden die vorliegend zeitlich variierenden Soll-Maximalentladestromwerte I^{E}ₘₐₓ und Soll-Maximalladestromwert I^{L}ₘₐₓ im Wesentlichen eingehalten und damit Schäden an den Batteriepacks 30A-30F verhindert.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen

### Bezugszeichenliste

- 10: Batteriepack
- 20: Kraftfahrzeug
- 30: Batteriesystem
- 30A-30F: Batteriepack
- 32: Batteriemodul
- 34: Modulgehäuse
- 36: Stützplatte
- 38: Kühlplatte
- 40: Vorrichtung zum Betreiben eines Batteriesystems
- I_{A}: Ausgleichsstrom
- I_{E}: Entladestrom
- I^{E}_{Lim}: Entladestromgrenze
- I^{E}ₘₐₓ: Soll-Maximalentladestromwerte
- I_{L}: Ladestrom
- I^{L}_{Lim}: Ladestromgrenze
- I^{L}ₘₐₓ: Soll-Maximalladestromwert
- R: Innenwiderstand

## Patentansprüche

1. Verfahren zum Betreiben eines Batteriesystems (30) für ein Kraftfahrzeug (20), vorzugsweise für ein Nutzfahrzeug, wobei das Batteriesystem (30) mehrere elektrisch miteinander verbundene, vorzugsweise elektrisch parallel geschaltete, Batteriepacks (30A-30F) aufweist und das Verfahren aufweist:
Ermitteln von aktuellen Ausgleichsströmen (I_{A}) zwischen den mehreren Batteriepacks (30A-30F), die vorzugsweise durch unterschiedliche Ladezustände der mehreren Batteriepacks (30A-30F) bewirkt sind;
Festlegen einer aktuellen Entladestromgrenze (I^{E}_{Lim}), die einen von dem Batteriesystem (30) aktuell maximal abführbaren Entladestrom (I_{E}) begrenzt, und/oder einer aktuellen Ladestromgrenze (I^{L}_{Lim}), die einen dem Batteriesystem (30) aktuell maximal zuführbaren Ladestrom (I_{L}) begrenzt, unter Berücksichtigung der ermittelten aktuellen Ausgleichsströme (I_{A}); und
Betreiben des Batteriesystems (30) unter Berücksichtigung der festgelegten aktuellen Entladestromgrenze (I^{E}_{Lim}) und/oder aktuellen Ladestromgrenze (I^{L}_{Lim}).

2. Verfahren nach Anspruch 1, wobei:
das Ermitteln und/oder Festlegen während des Betreibens des Batteriesystems (30) in regelmäßigen oder unregelmäßigen Zeitabständen, vorzugsweise alle 500 ms, besonders bevorzugt alle 100 ms, wiederholt werden/wird; und/oder
das Verfahren während eines Fahrbetriebs des Kraftfahrzeugs (20) durchgeführt wird und/oder das Verfahren durchgeführt wird, während eine Last an das Batteriesystem (30) angeschlossen ist.

3. Verfahren nach Anspruch 1 oder 2, wobei:
das Ermitteln ein, vorzugsweise auf einer Netzwerkanalyse des Batteriesystems (30) beruhendes, Berechnen der aktuellen Ausgleichsströme (I_{A}) unter Berücksichtigung mindestens einer der folgenden, vorzugsweise gemessenen oder geschätzten, Größen aufweist:
- aktuelle Ladezustände der mehreren Batteriepacks (30A-30F);
- aktuelle Spannungszustände der mehreren Batteriepacks (30A-30F);
- aktuelle Temperaturen der mehreren Batteriepacks (30A-30F);
- aktuelle Entladeströme (I_{E,i}) und/oder Ladeströme (I_{L,i}) der mehreren Batteriepacks (30A-30F);
- aktuelle Alterungszustände der mehreren Batteriepacks (30A-30F);
- aktuelle Kapazitäten der mehreren Batteriepacks (30A-30F); und
- aktuelle Innenwiderstände (Rᵢ,) der mehreren Batteriepacks (30A-30F).

4. Verfahren nach einem der vorherigen Ansprüche, wobei:
das Ermitteln aufweist:
Ermitteln von aktuellen Teilausgleichsströmen zwischen jeweils zwei der mehreren Batteriepacks (30A-30F); und
Überlagern der ermittelten aktuellen Teilausgleichsströme zum Erhalten der aktuellen Ausgleichsströme (I_{A}).

5. Verfahren nach einem der vorherigen Ansprüche, wobei:
das Festlegen unter Berücksichtigung von jeweiligen aktuellen Soll-Maximalentladestromwerten (I^{E}ₘₐₓ) und/oder aktuellen Soll-Maximalladestromwerten (I^{L}ₘₐₓ) der jeweiligen Batteriepacks (30A-30F) erfolgt.

6. Verfahren nach Anspruch 5, wobei:
die jeweiligen aktuellen Soll-Maximalentladestromwerte (I^{E}ₘₐₓ) und/oder Soll-Maximalladestromwerte (I^{L}ₘₐₓ) mittels eines Kennfelds und unter Berücksichtigung mindestens einer der folgenden, vorzugsweise gemessenen oder geschätzten, Größen ermittelt werden:
- einem aktuellen Ladezustand des jeweiligen Batteriepacks (30A-30F);
- eines aktuellen Spannungszustand des jeweiligen Batteriepacks (30A-30F);
- einer aktuellen Temperatur des jeweiligen Batteriepacks (30A-30F);
- einem aktuellen Entladestrom (I_{E,i}) und/oder Ladestrom (I_{L,i}) des jeweiligen Batteriepacks (30A-30F);
- einem aktuellen Alterungszustand des jeweiligen Batteriepacks (30A-30F);
- einer aktuellen Kapazität des jeweiligen Batteriepacks (30A-30F); und
- einem aktuellen Innenwiderstand (Rᵢ) des jeweiligen Batteriepacks (30A-30F).

7. Verfahren nach einem der vorherigen Ansprüche, wobei:
das Festlegen unter Berücksichtigung mindestens eines, vorzugsweise tiefpassgefilterten, aktuellen Gewichtungsfaktors (f_{W}) erfolgt, wobei der mindestens eine aktuelle Gewichtungsfaktor (f_{W}) in Abhängigkeit eines aktuellen Ladestroms (I_{L}) und/oder aktuellen Entladestroms (I_{E}) des Batteriesystems (30) angepasst wird.

8. Verfahren nach Anspruch 7, wobei:
der mindestens eine aktuelle Gewichtungsfaktor (f_{W}) aufweist:
einen aktuellen Widerstandsanteil (f_{R}), der einen aktuellen Innenwiderstandsanteil eines der mehreren Batteriepacks (30A-30F) an einem Gesamtinnenwiderstand (R_{Total}) des Batteriesystems (30) angibt; und
einen aktuellen Stromanteil (f_{C}) der einen, vorzugsweise ausgleichsstromkorrigierten, Entladestromanteil des einen der mehreren Batteriepacks (30A-30F) an einem, vorzugsweise ausgleichsstromkorrigierten, aktuellen Entladestrom (I_{E}) des Batteriesystems (30) und/oder einen, vorzugsweise ausgleichsstromkorrigierten, Ladestromanteil des einen der mehreren Batteriepacks (30A-30F) an einem, vorzugsweise ausgleichsstromkorrigierten, aktuellen Ladestrom (I_{L}) des Batteriesystems (30) angibt;
wobei der aktuelle Widerstandsanteil (f_{R}) und der aktuelle Stromanteil (f_{C}) über einen, vorzugsweise von dem aktuellen Entladestrom (I_{E}) und/oder aktuellen Ladestrom (I_{L}) des Batteriesystems (30) abhängigen Koeffizienten (a) miteinander verknüpft sind.

9. Verfahren nach einem der vorherigen Ansprüche, wobei:
das Ermitteln und/oder Festlegen unter Berücksichtigung eines nichtlinearen, vorzugweise exponentiellen, Zusammenhangs zwischen jeweiligen Innenwiderständen (Rᵢ) der mehreren Batteriepacks (30A-30F) und jeweiligen aktuellen Entladeströmen (I_{E,i}) und/oder jeweiligen aktuellen Ladeströmen (I_{L,i}) der mehreren Batteriepacks (30A-30F) erfolgt; und/oder
das Festlegen unter Berücksichtigung von jeweiligen Innenwiderständen (Rᵢ) der jeweiligen Batteriepacks (30A-30F) erfolgt; und/oder
das Verfahren ferner aufweist: Ausgleichen von Ladungsunterschieden von Batteriezellen innerhalb eines der mehreren Batteriepacks (30A-30F) mittels einer Balancing-Schaltung.

10. Verfahren nach einem der vorherigen Ansprüche, wobei:
beim Festlegen die aktuelle Entladestromgrenze (I^{E}_{Lim}) und die aktuelle Ladestromgrenze (I^{L}_{Lim}) festgelegt werden, wobei die aktuelle Entladestromgrenze (I^{E}_{Lim}) und die aktuelle Ladestromgrenze (I^{L}_{Lim}) unabhängig voneinander festgelegt werden und/oder sich betragsmäßig unterscheiden.

11. Verfahren nach einem der vorherigen Ansprüche, wobei:
die aktuelle Entladestromgrenze (I^{E}_{Lim}) zumindest zeitweise mindestens 100 Ampere, vorzugsweise mindestens 200 Ampere, besonders bevorzugt mindestens 300 Ampere, beträgt; und/oder
die aktuelle Ladestromgrenze (I^{L}_{Lim}) zumindest zeitweise mindestens 150 Ampere, vorzugsweise mindestens 250 Ampere, besonders bevorzugt mindestens 350 Ampere, beträgt.

12. Verfahren nach einem der vorherigen Ansprüche, wobei:
das Batteriesystem (30) eine Gesamtnennkapazität von mindestens 200 kWh, vorzugsweise mindestens 300 kWh, besonders bevorzugt mindestens 400 kWh, aufweist; und/oder
jedes der Batteriepacks (30A-30F) aufweist:
- ein, vorzugsweise geschlossenes, Gehäuse (39); und/oder
- eine Vielzahl von, vorzugsweise in mehreren planparallel versetzt zueinander angeordneten Ebenen angeordneten, Batteriezellen und/oder Batteriemodulen (32); und/oder
- eine Nennkapazität von mindestens 50 kWh, vorzugsweise mindestens 65 kWh, besonders bevorzugt mindestens 80 kWh.

13. Vorrichtung (40) zum Betreiben eines Batteriesystems (30) für ein Kraftfahrzeug (20), wobei das Batteriesystem (30) mehrere elektrisch miteinander verbundene, vorzugsweise elektrisch parallel geschaltete, Batteriepacks (30A-30F) aufweist, wobei die Vorrichtung (40) für ein Durchführen eines Verfahrens nach einem der vorherigen Ansprüche eingerichtet ist.

14. System für ein Kraftfahrzeug (20), aufweisend:
ein Batteriesystems (30), aufweisend mehrere elektrisch miteinander verbundene, vorzugsweise elektrisch parallel geschaltete, Batteriepacks (30A-30F); und
eine Vorrichtung (40) nach Anspruch 13.

15. Kraftfahrzeug (20), vorzugsweise Nutzfahrzeug, aufweisend:
eine Vorrichtung (40) nach Anspruch 13; und/oder
ein System (30) nach Anspruch 14.
